Europäisches Patentamt

**European Patent Office**

Office européen des brevets

(11) Publication number: **0 265 420 B1**

# EUROPEAN PATENT SPECIFICATION

(45) Date of publication of patent specification: **02.09.92**  (51) Int. Cl.5: **B29C 47/22**

(21) Application number: **87890235.2**

(22) Date of filing: **22.10.87**

(54) **Extrusion die for extruding plastics materials.**

(30) Priority: **23.10.86 AT 2830/86**

(43) Date of publication of application:
**27.04.88 Bulletin 88/17**

(45) Publication of the grant of the patent:
**02.09.92 Bulletin 92/36**

(84) Designated Contracting States:
**DE FR GB IT NL**

(56) References cited:
| | |
|---|---|
| BE-A- 661 892 | DE-A- 1 900 532 |
| DE-A- 3 137 739 | GB-A- 1 183 027 |
| US-A- 1 084 462 | US-A- 2 044 961 |
| US-A- 3 205 534 | US-A- 3 357 050 |
| US-A- 3 690 798 | US-A- 3 899 276 |
| US-A- 3 923 439 | US-A- 4 279 857 |
| US-A- 4 509 907 | |

PATENT ABSTRACTS OF JAPAN, vol. 8, no.
258 (M-340)[1695], 27th November 1984; &
JP-A-59 131 432 (MEIJI GOMU KASEI K.K.)
28-07-1984

(73) Proprietor: **CINCINNATI MILACRON INC.**
**4701 Marburg Avenue**
**Cincinnati Ohio 45209(US)**

(72) Inventor: **Dobrowsky, Josef Dipl.Ing.**
**Geneestr.11**
**A-3013 Tullnerbach(AT)**

(74) Representative: **Gibler, Ferdinand, Dipl.Ing. Dr.**
**techn.**
**Dorotheergasse 7/14**
**A-1010 Wien(AT)**

## Description

The present invention relates to an extrusion die for extruding plastics materials and for providing continuous extruded profiles of predetermined configuration. More particularly, the present invention relates to an improved extrusion die that includes an adjustable die opening to permit changing the wall thickness of an extruded profile, especially plastic pipes.

Plastic pipes and other profiles are commonly extruded through a fixed area die opening that defines an extrusion orifice. When extruding pipes or tubes, most commonly an inner arbor or mandrel is provided, around which an outer sleeve is positioned. The spacing between the inner surface of the outer sleeve and the outer surface of the mandrel at the die opening determines the thickness of the extruded article.

There have also been proposed dies for extruding profiles such as pipes, wherein the flow channel within the die head flares outwardly toward the die opening and wherein provision is made for varying the spacing between the mandrel and the outer sleeve by moving the mandrel in an axial direction while the sleeve is maintained stationary. One example of such a structural arrangement for an extrusion die is illustrated in U.S. patent 3,205,534, which issued September 14, 1965, to Erhard Langecker. In the Langecker device, a right-angle die head is provided, and the mandrel includes a central bore that carries a rod, and at the outlet end of he bore the rod includes an outwardly diverging conical end member. The opposite end of the rod is connected to a double-acting piston that is carried in a cylinder so that pressurized fluid admitted to an end of the cylinder will cause the piston, and consequently the conical end to the rod, to slide relative to the mandrel and relative to the fixed outer sleeve to thereby permit variation of the gap between the conical end of the rod and the outer sleeve at the die opening, and thereby provide pipes of different wall thicknesses. However, that structural arrangement requires a right-angle die head, which oftentimes results in non-uniform flow of the extruded material by virtue of its introduction at one side of the die head.

Another disclosure of a variable area annular extrusion die opening is found in U.S. patent 4,279,857, which issued July 21, 1981, to Harald Feuerherm. However, the die head structure disclosed in the Feuerherm patent also involves radial introduction of the extruded material. Moreover, it includes a more complicated mandrel structure to permit variation of the flow channel annular area, as well as the thickness of the extruded product.

An in-line adjustable extrusion die is also disclosed in the above-identified Langecker patent, and includes a fixed mandrel with a manually rotatable ring to axially slide a portion of the outer sleeve relative to the mandrel, to thereby permit variation of the wall thickness of the extruded product. However, that structure also involves an outwardly flaring flow passage, and it also does not include a power-operated adjusting mechanism.

Another patent that discloses movement of an outer ring relative to an inner mandrel of an extrusion die head is found in U.S. patent 3,357,050, which issued December 12, 1967, to Donald H. Criss. However, that structure does not permit any change in the annular die outlet configuration, because the inner wall of the sleeve and the outer wall of the mandrel are parallel to each other. The Criss apparatus is used as a throttling device to permit variation of the throughput rate of extruded material through the die opening.

It is an object of the present invention to overcome the deficiencies of the prior art extrusion die head structures and to provide a power-operated extrusion die opening adjustment device, as well as an improved extrusion die discharge outlet configuration.

Briefly stated, in accordance with one aspect of the present invention, an extruder die head is provided for extruding heated plastics materials thorugh a die opening. The die head includes an axially fixed inner mandrel of predetermined cross-section and axial configuration, and a tubular sleeve that surrounds the mandrell and defines with the mandrel a flow channel for carrying viscous, heated plastic material. The flow channel tapers inwardly, in converging fashion, immediately upstream of the die outlet at a predetermined angular relationship with the axis of the die head.

In accordance with another aspect of the present invention, an adjustable area extrusion die head is provided that inclues a stationary inner mandrel surrounded by an outer sleeve that is axially slidable relative to the mandrel. The space between the sleeve and the mandrel defines a flow channel for the heated, viscous plastic material. The sleeve is non-rotatably supported and include an external thread which is engagable with an internal thread formed on an adjusting sleeve that overlies and surrounds a portion of the nozzle sleeve. A powered drive arrangement is provided to rotate the adjusting sleeve, to thereby cause the outer sleeve to move in an axial direction relative to the mandrel.

Other objects and advantages will become apparent from the ensuing detailed description.

Figure 1 is a fragmentary cross-sectional view taken along the axial direction of an extrusion head in accordance with the present invention.

Figure 2 is an enlarged fragmentary view adjacent the outlet of the outer sleeve of the extrusion head of Figure 1, showing the curvature adjacent the outermost edge of the outer sleeve along the inner surface of the sleeve that defines a portion of the flow channel.

Figure 3 is an enlarged fragmentary cross-sectional view adjacent the outlet of the outer sleeve, and shows the inward curvature adjacent the outermost end thereof and the intersection of that curvature with an intermediate cylindrical portion.

Figure 4 is an enlarged fragmentary view similar to Figure 2, showing the curvature at the end portion of the mandrel.

Figure 5 is an enlarged fragmentary longitudinal cross-sectional view, similar to that of Figure 3, of the end portion of the mandrel for the nozzle ring.

Figure 6 is an enlarged fragmentary cross-sectional view adjacent the die head outlet showing the innermost and outermost positions of the outer sleeve relative to the inner mandrel.

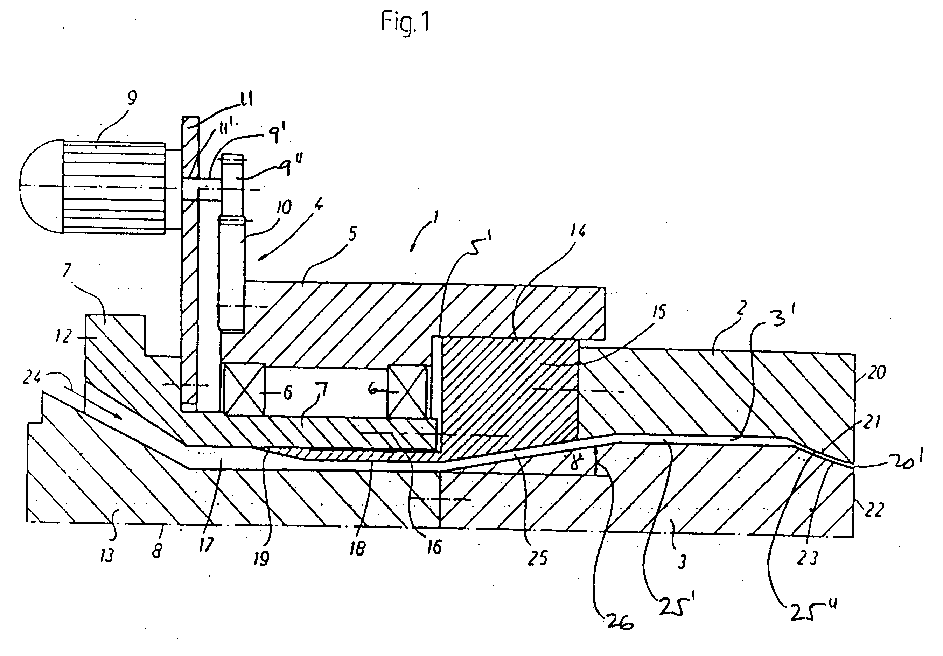

Referring now to the drawings, and particularly to Figure 1 thereof, there is shown an extruder die head 1 for extruding continuous profiles, such as pipes. Die head 1 includes an outlet portion, extending along the axial length of mandrel 3, and an adapter portion, extending along the axial length of mandrel 13, which is non-rotatably connected with mandrel 3. The die head outlet portion defines a flow channel 3′ and terminates in an outlet orifice 20′, from which plastic material issues to provide the desired profile. The adapter portion of the die head is positioned between the outlet portion of the die head and the downstream outlet of an extruder (not shown) from which heated plastic material flows in the direction of arrow 24, and includes a flow channel 17 that communicates with flow channel 3′ in the outlet portion.

The extruder die head in accordance with the present invention can be used with either single screw extruders, or, alternatively, with twin screw extruders, and because the structure and operation of such machines are well known to those skilled in the art, no further description of the extruder itself is believed to be necessary. Although the following description will be based upon a symmetrical outlet orifice to provide a tubular pipe of uniform cross-section, it should be understood that the present invention is not so limited, and other profiles can also be extruded using an extruder head in accordance with the present invention.

The outlet portion of the die head includes mandrel 3 of circular cross-section, and outer sleeve 2 that surrounds and is co-axial with mandrel 3. The outer surface of mandrel 3 is spaced inwardly from a correspondly shaped inner surface of outer sleeve 2 to define therebetween outlet portion flow channel 3′. As shown, flow channel 3′

is divided into three individual parts: a first, pressure balance zone 25; a second, axial flow zone 25′; and a third, outlet flow zone 25″.

The portion of outer sleeve 2 adjacent pressure balance zone 25 includes an adjusting casing 15 that is non-rotatably connected to the upstream side of the outer sleeve by means of bolts, or the like. Adjusting casing 15 is of annular configuration, and the inner surface thereof forms a part of pressure balance zone 25 and joins with outer sleeve 2 in such a way as to provide a continuous flow surface. As shown, the outer surface of adjusting casing 15 has a diameter slightly greater than that of outer sleeve 2, and includes an external screw thread 14, which can be of any desired type, such as an Acme thread, a ball screw thread, or the like.

Extending from the upstream end of adjusting casing 15 is a thin, tubular sleeve 18 that defines a cylindrical guide section, the inner surface of which forms part of flow channel 17. Sleeve 18 terminates at its upstream end in a sharp-edge extension, the outermost peripheral surface of which defines a sliding sealing surface 19, as will be explained more fully hereinafter. The cylindrical guide section, as shown, extends into flow channel 17 defined in the adapter portion of the die head.

The adapter portion of the die head includes mandrel 13 that is co-axial with mandrel 3 of the outlet portion of the die head, and also includes an outer, co-axially disposed connection portion 7, that defines the outermost surface of flow channel 17 that receives the outlet flow of material from an extruder (not shown) so that the material enters the adapter portion in the direction of arrow 24. The adapter portion flow channel 17 includes a downstream, tubular passageway, defined by tubular sleeve 7′ and an inwardly converging upstream connecting passageway that serves as a transition between the extruder outlet (not shown) and the downstream passageway. Mandrel 13 is suitably connected at its upstream end to the center portion of an extruder outlet, or to an extruder outlet adapter, as will be appreciated by those skilled in the art, and the upstream end is non-rotatably connected to mandrel 3 of the outlet portion, so that both the mandrels are each fixed with respect to each other and are non-rotatably positioned in the extruder die head.

Connection portion 7 is also secured to either the outlet portion of an extruder, or an adapter, again as will be appreciated by those skilled in the art, and is securely fixed with either the extruder outlet or an adapter outlet, as the case may be, by means of bolts, or the like, which pass through an outwardly extending flange 12. Connected to the downstream side of flange 12, as by means of bolts or the like, is a drive fastening plate 11, which extends radially outwardly from the central axis 8 of the die head. A drive motor 9 is securely mounted on the upstream side of drive fastening plate 11, which includes an opening 11 through which motor drive shaft 9′ extends. As shown, the axis of motor drive shaft 9′ is parallel with axis 8 of the die head. A drive gear 9″ is secured to motor drive shaft 9′ to rotate therewith.

The adapter portion of the die head also includes an annular, stepped adjusting sleeve 5, that is rotatably carried on the outer surface of tubular sleeve 7′ of connection portion 7 by means of a pair of axially spaced ball or roller bearings 6. The outer races of the bearings are carried in a reduced diameter portion of adjusting sleeve 5.

The downstream inner end of adjusting sleeve 5 includes an enlarged diameter portion 5′ that includes an internal thread that is engageable with external thread 14 on adjusting casing 15 so that adjusting sleeve 5 is capable of rotation relative to adjusting casing 15. A ring gear 10 is securely carried on the upstream face of adjusting sleeve 5, and is in the form of an annular ring that is secured to adjusting sleeve 5 by means of bolts, or the like. Ring gear 10 includes external gear teeth that are in meshing engagement with drive gear 9″ carried on motor drive shaft 9′.

Adjusting casing 15 is non-rotatably but axially slidably supported by connection portion 7 by means of axially extending guide pins 16 that are securely carried by and fixed in tubular sleeve 7′, such as by a press fit. Guide pins 16 are of generally cylindrical form, and are received in correspondingly sized guide passageways formed in adjusting casing 15 so that adjusting casing 15 is axially slidable relative to connection portion 7, but is not rotatable relative thereto. A suitable number of such guide pins and guide passageways are provided in circumferentially spaced relationship.

The outer peripheral surface of cylindrical guide section 18 includes an annular recess, that defines a reduced axial length sliding and sealing surface 19 adjacent the upstream end of the cylindrical guide section. Surface 19 is adapted to slide into and out of flow channel 17, along the inner surface of sleeve 7′. The reduced axial length of sealing surface 19 is intended to minimize the frictional drag between the two contacting surfaces, while maintaining a good seal therebetween at the upstream end of the cylindrical guide section to confine the flow of material to flow channel 17.

In operation, plastic material in molten form issues from the outlet of an extruder (not shown), enters flow channel 17 at arrow 24, and then passes into flow channel 3′ of the outlet portion of the die head. The material issues through outlet orifice 20′ in annular form and is then cooled to define a pipe having a predetermined outer diameter, determined by the inner diameter of outer sleeve 2 at outlet end 20, and having an inner diameter dependent upon the position of the outer sleeve with respect to the mandrel, as well as the temperature and the physical characteristics of the extruded material. Should the wall thickness of the pipe that issues from the extruder die head be desired to be changed, outer sleeve 2 is moved axially either in a rightward direction, as viewed in Figure 1, to provide a greater wall thickness, or, leftwardly, as viewed in Figure 1, to provide a smaller wall thickness. The axial movement of outer sleeve 2 is effected by adjusting mechanism 4 by actuating drive motor 9 to rotate in the proper direction, to rotate drive gear 9″, which thereupon drives ring gear 10 to cause the adjusting sleeve 5 to rotate on bearings 6. By virtue of the threaded interconnection between adjusting sleeve 5 and adjusting casing 15, and by virtue of the secure connection between adjusting casing 15 and outer sleeve 2, the rotation of adjusting sleeve 5 causes the assembly of adjusting casing 15 and outer sleeve 2 to translate axially a distance depending upon the pitch of thread 14 and the degree of rotation of ring gear 10 imparted by drive motor 9 through drive gear 9″. As earlier noted, because of guide pins 16 extending between adjusting casing 15 and connection portion 7, relative rotation between those two parts is prevented, and only relative axial motion therebetween takes place. Cylindrical guide section 18 slides axially relative to tubular sleeve 7′.

As is apparent from Figure 1, annular flow channels 17 and 31′ are co-axial with the extruder die head. The inlet portion at pressure compensation zone 25′ is also annular but it flares outwardly in diverging fashion relative to axis 8, to an intermediate point, whereupon it assumes a tubular co-axial passageway once again at axial flow zone 25′, but of greater inner and outer diameter, to a second point, spaced inwardly from outlet orifice 20′, whereupon the flow channel, which remains annular, converges inwardly toward axis 8 to define an inwardly converging outlet flow zone 25″ defined by surfaces 21 and 23, and terminates at outlet orifice 20′. Preferably, the outlet flow zone is of curved shape, and is defined by convex surface 21 on the inner surface of outer sleeve 2 adjacent end face 20, and a corresponding concave surface 23 on mandrel 3 adjacent end face 22. Thus outlet flow zone 25″ gradually curves toward axis 8 of the extruder die head outlet in a smoothly merging fashion.

As will also be apparent from Figure 1, when the material flows under pressure through die head 1, the pressure of the material at outlet flow zone 25″ causes an axial force on outer sleeve 2 that urges the outer sleeve in a downstream direction along the axis 8. At the same time, an opposite, balancing force is imposed upon adjusting casing 15 in pressure balance zone 25, by virtue of the opposite slope of the pressure balance zone relative to the outlet flow zone. The balancing force thereby provided is dependent upon the pressure of the material in the pressure balance zone 25, and the projected area, in a plane perpendicular to axis 8, of adjusting casing 15 and outer sleeve 2 in that zone. Thus, pressure balance zone 25 provides an offsetting axial force for the axial force generated at outlet flow zone 25″ by the configuration of the flow passageway, and thereby reduces the force necessary to move outer sleeve 2 axially to adjust outlet flow orifice 20′. The angle of inclination 26 of the pressure balance zone 25 is preferably about 10° relative to axis 8.

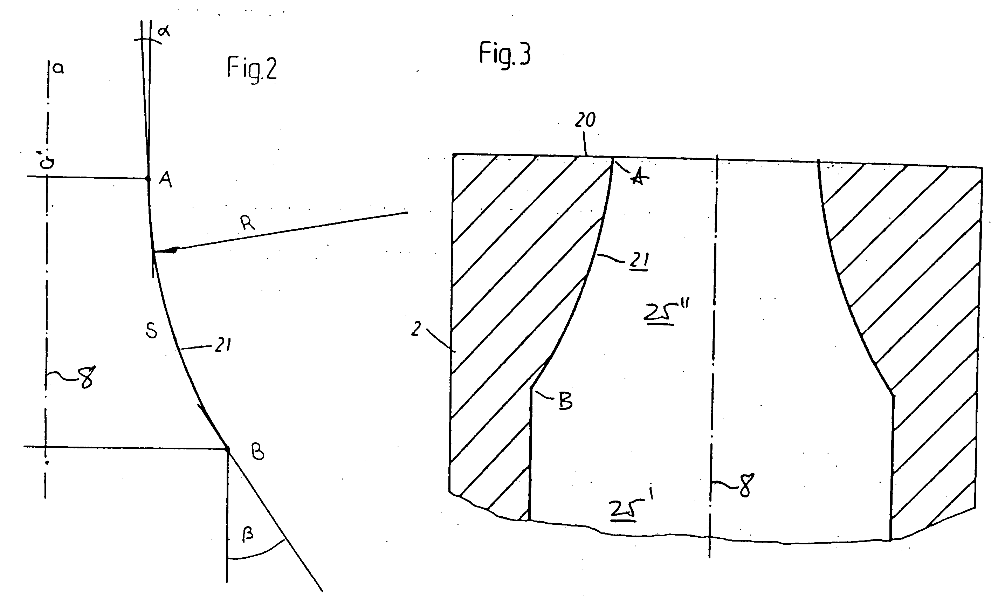

Referring now to Figures 2 and 3, there is shown in enlarged detail the curvature at the innermost surface 21 of outer sleeve 2 at a point adjacent the downstream end face 20 thereof. Figure 3 shows the inner portion of the outer sleeve inner surface at axial flow zone 25′, and at the gradually inwardly extending outlet flow zone 25″.

As seen in Figure 2, which shows the concave surface portion 21 defined by curve S which is a circular arc having a radius of curvature R between about 150mm and about 500mm, the tangent to curve S at point A adjacent to end face 20 of outer sleeve 2, is inclined at an angle $\alpha$ relative to axis 8, which angle preferably lies within the range of from about 0° to 20°. At the innermost end of curve S, defined by point B, the tangent to curve S at that point is inclined at an angle $\beta$ relative to axis 8, which angle preferably ranges from about 1° to about 90°. The convex surface 21 at the outermost end of outer sleeve 2 is thus defined by the surface of revolution of curve S as it is rotated about axis 8.

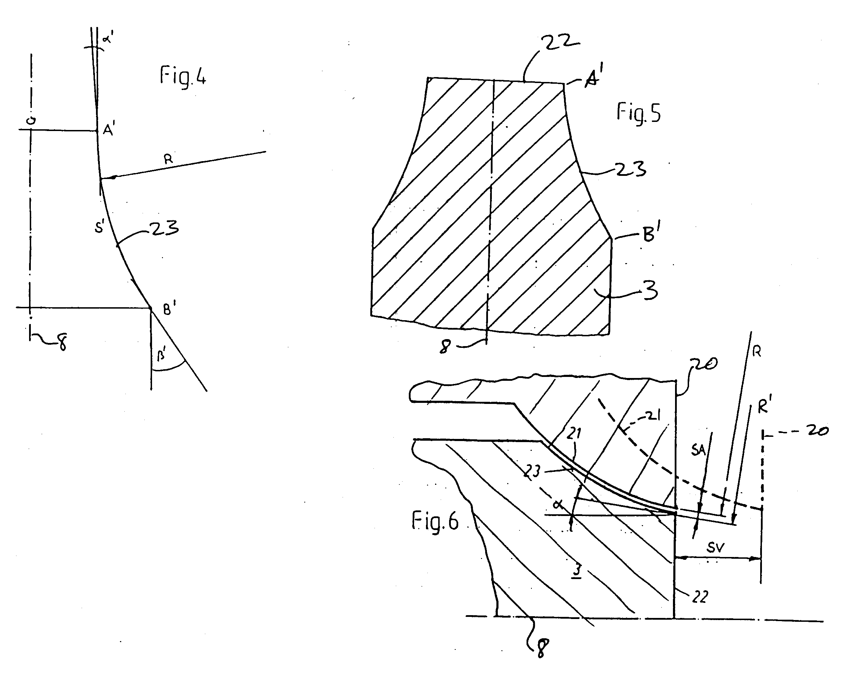

Referring now to Figures 4 and 5, the corresponding curvature adjacent the outermost end 22 of mandrel 3 is illustrated. As shown in Figure 5, concave surface 23 terminates at an inner transition point B′, upstream of which mandrel 3 is cylindrical. As shown in Figure 4, concave portion 23 is defined by curve S′, which is a circular arc having a radius of curvature R′, which extends from point A′ to point B′. Point A′ is at end face 20 of mandrel 3, and a tangent to curve S′ at point A′ defines an angle $\alpha'$ relative to axis 8. Angle $\alpha'$ corresponds with angle $\alpha$ on the outer sleeve and also ranges from about 0° to about 20° Similarly, a tangent to curve S′ at point B′ defines an angle $\beta'$ relative to axis 8, which corresponds with angle $\beta$ for outer sleeve 2, and preferably ranges from about 1° to about 90°.

The radius of curvature R′ is greater than the radius of curvature R by the distance SA as illustrated in Figure 6, which is an enlarged sectional view of both outer sleeve 2 and mandrel 3 adjacent the outlet of the die head. In that regard, the position of outer sleeve 2 shown in full lines, with the respective end faces 20 and 22 of the outer sleeve and of the mandrel aligned, defines a contant width flow channel, whereas when outer sleeve 2 is moved axially outwardly from end face 22 of mandrel 3 to the position illustrated in the dashed lines in Figure 6, an axial distance of SV, the outlet flow zone 25″ has a width that diminishes gradually in the direction toward the outlet. Also clearly visible in Figure 6 is the direction of the outlet flow so that it extends smoothly in an axial direction toward a downstream cooling device (not shown).

Although outlet flow zone 25″ is illustrated and described as also being defined by circular arcs, curves in the form of elliptical, parabolic, or hyperbolic curves can also be used to define the curved surfaces in that zone. However, it is preferred that the curved surfaces of the outer sleeve and mandrel be of the same general form.

It can thus be seen that the present invention provides an improved apparatus for regulating the wall thickness of extruded pipe, by providing an adjustable extruder die head that permits axial movement of an outer sleeve relative to an inner mandrel to permit adjustment of the wall thickness, and consequently of the inner diameter, of an extruded pipe. Furthermore, the provision of an upstream pressure balance zone to offset the force imposed upon the outer sleeve by the inwardly converging outlet flow zone reduces the axial force that must be overcome in effecting any adjustment of the position of the outer sleeve.

## Claims

1. An adjustable extruder die head defining a flow channel having an outlet for providing an extruded profile, the outlet being adjustable for permitting adjustment of a thickness dimension of the profile, said apparatus comprising:
   a) stationary mandrel means (3) defining an inner surface of a flow channel;
   b) movable outer sleeve means (2) positioned co-axial with and in surrounding relationship with the mandrel means (3) to define an outer surface of a flow channel;
   c) the flow channel tapering inwardly in an axial direction toward an outlet orifice (20') defined at outlet ends of the sleeve means and of the mandrel means (3); and
   d) adjusting means carried by the die head for moving the outer sleeve means (2) relative to the mandrel means (3),

   wherein an outlet zone of the flow channel is defined by a first surface on an inner portion of the outer sleeve means (2), and a second surface on the mandrel means (3) and opposite the first surface, the opposed surfaces each being curved and flaring inwardly toward the longitudinal axis of the die head adjacent an outlet defined between the sleeve means and the mandrel means (3).

2. A die head in accordance with claim 1, wherein the adjusting means includes drive motor means (9) for moving the outer sleeve means (2) relative to the mandrel means (3) to change to the thickness of the extruded profile.

3. A die head in accordance with claim 2, wherein the outer sleeve (2) is externally threaded, and the adjusting means includes adjusting sleeve means (5) of generally annular form that is positioned around and is threadedly engaged with the external threads on the outer sleeve means (2).

4. A die head in accordance with claim 2, wherein the adjusting means includes first gear means (10) carried by the adjusting sleeve means (5), second gear means (9'') engagable with the first gear means (10) for rotating the adjusting sleeve means (5), and where in the drive motor (9) is drivingly connected with the second gear means (9'').

5. A die head in accordance with claim 4, wherein the first gear means (10) is a ring gear, and the second gear means is a drive gear (9'') spaced radially outwardly of the ring gear (10) and in meshing engagement therewith, and the drive gear is rotatable about a fixed axis (9').

6. A die head in accordance with claim 2, wherein the outer sleeve (2) includes an axially extending cylindrical guide section slidably received within the flow channel (3') for movement along the flow channel (3'), the cylindrical guide section being sealingly engaged with an outermost surface of the flow channel to prevent material flow around the outer portion of the cylindrical guide section.

7. A die head in accordance with claim 6, wherein the cylindrical guide section includes a tapered end that extend into the flow channel.

8. A die head in accordance with claim 2, wherein the die head includes a adapter portion (7) positioned between an outlet portion and an extruder, and the drive motor means (9) is secured to and carried by the adapter portion (7).

9. A die head in accordance with claim 8, including guide means extending between the outer sleeve (2) and the adapter portion (7) for permitting relative axial movement therebetween and for preventing relative rotation therebetween.

10. A die head in accordance with claim 9, wherein the guide means includes axially extending guide pins secured to a forward end of the adapter portion (7), and a plurality of axially extending openings in the outer sleeve means for slidably receiving respective ones of the guide pins.

11. A die head in accordance with claim 1, wherein the opposed curved surfaces are each defined by circular arcs.

12. A die head in accordance with claim 11, wherein the opposed curved surfaces are defined by circular arcs having a constant radius, and the radius of curvature of the curved surface on the mandrel means is greater than the radius of curvature of the curved surface on the outer sleeve means.

13. A die head in accordance with claim 12, wherein the radius of curvature of the sleeve means (2) is from about 150mm to about 500mm.

14. A die head in accordance with claim 12, wherein the angle of a tangent to the curved surface of the outer sleeve means (2) at the outlet of the extruder head relative to the die head axis is from about 1° to about 20°.

15. A die head in accordance with claim 12, wherein the angle of a tangent to the curved surface of the outer sleeve means (2) at an innermost edge of the curved surface relative to the die head axis ranges from about 1° to about 90°.

16. A die head in accordance with claim 1, wherein the die head flow channel diverges outwardly from the die head longitudinal axis in the flow direction from at a point spaced inwardly of the die head outlet toward the die head outlet to define a pressure balance zone in the flow channel in which pressure exerted by the flowing material excerts a force on the outer sleeve means (2) having an axial component that is opposite to and at least partially offsets of the axial component of the force of the material acting on the inward taper of the outer sleeve means adjacent the die head outlet.

## Patentansprüche

1. Einstellbarer Extruderdüsenkopf, der einen Strömungskanal festlegt, der einen Auslaß besitzt, um ein extrudiertes Profil zu liefern, wobei der Auslaß einstellbar ist, um die Einstellung der Dickenabmessung des Profils zu ermöglichen, wobei die Vorrichtung enthält:

   a) einen ortsfesten Dorn (3), der eine Innenfläche eines Strömungskanals festlegt;

   b) eine bewegbare Außenbuchse (2), die koaxial mit und um den Dorn (3) angeordnet ist, um eine Außenfläche eines Strömungskanals festzulegen;

   c) wobei sich der Strömungskanal nach innen in axialer Richtung zu einer Auslaßöffnung (20') verjüngt, die am Auslaßende der Buchse und des Dorns (3) festgelegt ist; und

   d) eine Einstelleinrichtung, die vom Düsenkopf getragen wird, um die Außenbuchse (2) relativ zum Dorn (3) zu bewegen,

   wobei ein Auslaßbereich des Strömungskanals von einer ersten Fläche auf einem Innenteil der Außenbuchse (2) sowie einer zweiten Fläche auf dem Dorn (3) gegenüber der ersten Fläche festgelegt ist, wobei die gegenüberliegenden Flächen jeweils gekrümmt sind und sich nach innen zur Längsachse des Düsenkopfs neben einem Auslaß aufweiten, der zwischen der Buchse und dem Dorn (3) gebildet wird.

2. Düsenkopf gemäß Anspruch 1, wobei die Einstelleinrichtung einen Antriebsmotor (9) aufweist, um die Außenbuchse (2) relativ zum Dorn (3) zu bewegen, um die Dicke des extrudierten Profils zu verändern.

3. Düsenkopf gemäß Anspruch 2, wobei die Außenbuchse (2) ein Außengewinde besitzt, und wobei die Einstelleinrichtung eine Einstellbuchse (5) aufweist, die im allgemeinen ringförmig aufgebaut und um das Außengewinde auf der Außenbuchse (2) angeordnet ist, wobei sie in dieses gewindemäßig eingreift.

4. Düsenkopf gemäß Anspruch 2, wobei die Einstelleinrichtung ein erstes Zahnrad (10), das von der Einstellbuchse (5) getragen wird, sowie ein zweites Zahnrad (9") aufweist, das in das erste Zahnrad (10) eingreifen kann, um die Einstellbuchse (5) in Drehung zu versetzen, und wobei der Antriebsmotor (9) mit dem zweiten Zahnrad (9") antriebsmäßig verbunden ist.

5. Düsenkopf gemäß Anspruch 4, wobei das erste Zahnrad (10) ein Ringzahnrad ist, und wobei das zweite Zahnrad ein Antriebszahnrad (9") ist, das radial außerhalb des Ringzahnrads (10) beabstandet ist und mit diesem in Eingriff steht, und wobei das Antriebszahnrad um eine ortsfeste Achse (9') drehbar ist.

6. Düsenkopf gemäß Anspruch 2, wobei die Außenbuchse (2) einen axial verlaufenden, zylindrischen Führungsteil aufweist, der im Strömungskanal (3') verschiebbar aufgenommen wird, um sich längs des Strömungskanals (3') zu bewegen, wobei der zylindrische Führungsteil mit einer äußersten Fläche des Strömungskanals abdichtend in Eingriff steht, um einen Materialfluß um den äußeren Teil des zylindrischen Führungsteils zu verhindern.

7. Düsenkopf gemäß Anspruch 6, wobei der zylindrische Führungsteil ein sich verjüngendes Ende aufweist, das in den Strömungskanal verläuft.

8. Düsenkopf gemäß Anspruch 2, wobei der Düsenkopf einen Adapterteil (7) aufweist, der zwischen einem Auslaßteil und einem Extruder angeordnet ist, und wobei der Antriebsmotor (9) am Adapterteil (7) befestigt ist und von diesem getragen wird.

9. Düsenkopf gemäß Anspruch 8, wobei der Düsenkopf eine Führungseinrichtung aufweist, die zwischen der Außenbuchse (2) und dem Adapterteil (7) verläuft, um eine relative Axialbewegung dazwischen zuzulassen und eine relative Drehung dazwischen zu verhindern.

10. Düsenkopf gemäß Anspruch 9, wobei die Führungseinrichtung axial verlaufende Führungszapfen, die an einem vorderen Ende des Adapterteils (7) befestigt sind, sowie eine Vielzahl von axial verlaufenden Öffnungen in der Außenbuchse aufweist, um die entsprechenden Führungszapfen verschiebbar aufzunehmen.

11. Düsenkopf gemäß Anspruch 1, wobei die entgegengesetzt gekrümmten Flächen jeweils von Kreisbogen gebildet werden.

12. Düsenkopf gemäß Anspruch 11, wobei die entgegengesetzt gekrümmten Flächen von Kreisbogen gebildet werden, die einen konstanten Radius besitzen, und wobei der Krümmungsradius der gekrümmten Fläche auf dem Dorn größer als der Krümmungsradius der gekrümmten Fläche auf der Außenbuchse ist.

13. Düsenkopf gemäß Anspruch 12, wobei der Krümmungsradius der Buchse (2) zwischen etwa 150mm und etwa 500mm liegt.

**14.** Düsenkopf gemäß Anspruch 12, wobei der Winkel einer Tangente der gekrümmten Fläche der Außenbuchse (2) am Auslaß des Extruderkopfs relativ zur Düsenkopfachse im Bereich von etwa 1° und etwa 20° liegt.

**15.** Düsenkopf gemäß Anspruch 12, wobei der Winkel einer Tangente der gekrümmten Fläche der Außenbuchse (2) am innersten Rand der gekrümmten Fläche relativ zur Düsenkopfachse im Bereich von etwa 1° bis etwa 90° liegt.

**16.** Düsenkopf gemäß Anspruch 1, wobei der Düsenkopf-Strömungskanal von der Düsenkopf-Längsachse in Strömungsrichtung von einer Stelle divergiert, die innerhalb des Düsenkopfauslasses zum Düsenkopfauslaß beabstandet ist, um einen Druckausgleichsbereich im Strömungskanal festzulegen, in dem der vom strömenden Material ausgeübte Druck eine Kraft auf die Außenbuchse (2) ausübt, die einen Axialanteil besitzt, der zum Axialanteil jener Kraft des Materials entgegengesetzt gerichtet ist und diesen zumindest teilweise aufhebt, die auf die innere Verjüngung der Außenbuchse neben dem Düsenkopfauslaß wirkt.

**Revendications**

**1.** Tête d'extrudeuse réglable définissant un canal d'écoulement pourvu d'un orifice pour fournir un profilé extrudé, l'orifice étant réglable pour permettre l'ajustement d'une dimension d'épaisseur du profilé, ce dispositif comportant :

    a) des moyens de mandrin stationnaire (3) définissant une surface intérieure d'un canal d'écoulement ;

    b) des moyens mobiles de gainage externe (2) placés coaxialement et entourant les moyens de mandrin (3) pour définir une surface externe d'un canal d'écoulement ;

    c) le canal d'écoulement faisant saillie vers l'intérieur en direction axiale vers un orifice de sortie (20') défini à des extrémités d'orifice des moyens de gainage (2) par rapport aux moyens de mandrin (3) ;

    d) des moyens de réglage portés par la tête d'extrudeuse pour déplacer les moyens de gainage externe (2) par rapport aux moyens de mandrin,

    dans lequel une zone de sortie du canal d'écoulement est définie par une première surface d'une partie interne des moyens de gainage externe (2) et par une seconde surface des moyens de mandrin (3) faisant face à la première surface, les surfaces en vis-à-vis étant chacune courbes et s'évasant vers l'intérieur vers l'axe longitudinal de la tête de d'extrusion près d'un orifice défini entre les moyens de gainage (2) et les moyens de mandrin (3).

**2.** Tête d'extrudeuse selon la revendication 1, dans laquelle les moyens d'ajustement comprennent des moyens moteurs (9) pour déplacer les moyens de gainage externe (2) par rapport aux moyens de mandrin (3) afin de modifier l'épaisseur du profilé extrudé.

**3.** Tête d'extrudeuse selon la revendication 2, dans laquelle la gaine externe (2) est filetée extérieurement et les moyens d'ajustement comprennent des moyens de gainage réglable (5) de forme sensiblement annulaire qui sont placés autour et sont vissés sur les filetages externes des moyens de gainage externe (2).

**4.** Tête d'extrudeuse selon la revendication 2, dans laquelle les moyens d'ajustement comprennent des premiers moyens d'engrenage (10) portés par les moyens de gainage réglable (5), des seconds moyens d'engrenage (9") pouvant être mis en prise avec les premiers moyens d'engrenage (10) pour faire tourner les moyens de gainage réglable (5) et dans laquelle le moteur d'entraînement (9) est relié de façon motrice aux seconds moyens d'engrenage (9").

**5.** Tête d'extrudeuse selon la revendication 4, dans laquelle les premiers moyens d'engrenage (10) sont un engrenage en anneau et les seconds moyens d'engrenage sont un engrenage de transmission (9") distant radialement vers l'extérieur de l'engrenage en anneau (10) et en prise avec lui, et l'engrenage de transmission est rotatif autour d'un axe fixe (9').

**6.** Tête d'extrudeuse selon la revendication 2, dans laquelle le gainage externe (2) comprend une partie guide cylindrique disposée axialement et reçue coulissante dans le canal d'écoulement (3') pour se déplacer le long du canal d'écoulement (3'), la partie guide cylindrique étant en contact scellé avec une surface la plus externe du canal d'écoulement pour empêcher un écoulement de matériau autour de la zone externe de la partie guide cylindrique.

**7.** Tête d'extrudeuse selon la revendication 6, dans laquelle la partie guide cylindrique comporte une extrémité en saillie qui pénètre dans le canal d'écoulement.

8. Tête d'extrudeuse selon la revendication 2, dans laquelle la tête d'extrusion comporte une partie adaptatrice (7), placée entre une partie orifice et une extrudeuse, tandis que les moyens moteurs d'entraînement (9) sont reliés à, et portés par, la partie adaptatrice (7).

9. Tête d'extrudeuse selon la revendication 8, dans laquelle sont prévus des moyens guides disposés entre le gainage externe (2) et la partie adaptatrice (7) pour permettre un mouvement relatif axial entre eux et pour empêcher une rotation relative entre eux.

10. Tête d'extrudeuse selon la revendication 9, dans laquelle les moyens guides comportent des tenons guides disposés axialement et fixés à une extrémité avant de la partie adaptatrice (7), ainsi que plusieurs ouvertures disposées axialement dans les moyens de gainage externe pour recevoir coulissant des tenons guides correspondants.

11. Tête d'extrudeuse selon la revendication 1, dans laquelle les surfaces courbes en vis-à-vis sont chacune définies par des arcs circulaires.

12. Tête d'extrudeuse selon la revendication 11, dans laquelle les surfaces courbes en vis-à-vis sont définies par des arcs circulaires de rayon constant et le rayon de courbure de la surface courbe des moyens de mandrin est supérieur au rayon de courbure de la surface courbe des moyens de gainage externe.

13. Tête d'extrudeuse selon la revendication 12, dans laquelle le rayon de courbure des moyens de gainage (2) est compris entre environ 150 mm et environ 500 mm.

14. Tête d'extrudeuse selon la revendication 12, dans laquelle l'angle d'une tangente à la surface courbe des moyens de gainage externe (2), à l'orifice de la tête d'extrusion, par rapport à l'axe de la tête d'extrusion, est compris entre environ 1 degré et environ 20 degrés.

15. Tête d'extrudeuse selon la revendication 12, dans laquelle l'angle d'une tangente à la surface courbe des moyens de gainage externe (2), à un bord le plus interne de la surface courbe, par rapport à l'axe de la tête d'extrusion, va d'environ 1 degré à environ 90 degrés.

16. Tête d'extrudeuse selon la revendication 1, dans laquelle le canal d'écoulement de la tête d'extrusion diverge vers l'extérieur à partir de l'axe longitudinal de la tête d'extrusion dans la direction d'écoulement, à partir d'un point distant vers l'intérieur de l'orifice de la tête d'extrusion, vers l'orifice de la tête d'extrusion, pour définir une zone d'équilibrage de pression dans le canal d'écoulement, dans laquelle la pression exercée par le matériau s'écoulant exerce une force sur les moyens de gainage externe (2) ayant une composante axiale qui est opposée à, et au moins annule partiellement, la composante axiale de la force du matériau agissant sur la protubérance interne des moyens de gainage externe adjacente à l'orifice de la tête d'extrusion.

Fig.1

EP 0 265 420 B1

Fig.2

Fig.3

EP 0 265 420 B1

Fig.5

Fig.6

Fig.4